# EUROPÄISCHE PATENTSCHRIFT

(11) **EP 3 369 352 B1**
(45) Veröffentlichungstag und Bekanntmachung des Hinweises auf die Patenterteilung: **02.10.2019**
(21) Anmeldenummer: 18156550.8
(22) Anmeldetag: 13.02.2018
(51) Int. Cl.: A47J 31/44

(54) **GETRÄNKEZUBEREITUNGSVORRICHTUNG**
DRINK PREPARATION DEVICE
DISPOSITIF DE PRÉPARATION DE BOISSONS

(30) Priorität: 03.03.2017 DE 102017203481
(43) Veröffentlichungstag der Anmeldung: 05.09.2018
(73) Patentinhaber: BSH Hausgeräte GmbH, 81739 München (DE)
(72) Erfinder: Costa, Shanon, 83301 Traunreut (DE); Haunerdinger, Martin, 83367 Petting (DE); Hauser, Andreas, 83026 Rosenheim (DE)

(56) Entgegenhaltungen:
- EP-A1- 0 791 321
- DE-U1-202011 109 479
- DE-U1-202012 104 836
- US-A- 5 549 036

## Beschreibung

Die Erfindung betrifft eine Getränkezubereitungsvorrichtung, insbesondere einen Kaffeevollautomat, mit einer Milchaufschäumvorrichtung und mit einer Milchzuführeinrichtung zum Zuführen von Milch zur Milchaufaufschäumvorrichtung, gemäß dem Oberbegriff des Anspruchs 1.

Zur Aufschäumung der Milch muss der Getränkezubereitungsvorrichtung Milch zugeführt werden. Dazu ist meist ein Milchbehälter vorgesehen, der neben die Getränkezubereitungsvorrichtung gestellt wird, wobei über einen Milchschlauch die Milch der Getränkezubereitungsvorrichtung zugeführt wird. Üblicherweise gibt es nur eine Anschlussstelle für den Milchschlauch, so dass der Milchbehälter an einer vorgeschriebenen Position an der Getränkezubereitungsvorrichtung angeordnet sein muss. Dies schränkt die Freiheit beim Aufstellen der Getränkezubereitungsvorrichtung ein.

Die DE 20 2012 104 836 U1 offenbart eine Milchaufschäumvorrichtung mit externer Milchbereitstellung für Heißgetränkemaschinen, die dadurch gekennzeichnet ist, dass die Milchaufschäumvorrichtung eine Milchmischeinheit aufweist, die in mindestens zwei unterschiedlichen Einbaulagen in die Milchaufschäumvorrichtung einbaubar ist, so dass ein externer Milchbehälter sowohl auf der rechten als auch auf der linken Seite einer Heißgetränkemaschine platziert werden kann. Die US 5 549 036 A offenbart eine Vorrichtung zur Herstellung von Cappuccino mit einer Kaffeezubereitungseinheit und einer separaten Milchzubereitungseinheit. Die beiden Einheiten sind in einzelnen und separaten Schränken untergebracht und durch einen Satz Flüssigkeitsleitungen miteinander verbunden, die Milch von der Milcheinheit zur Kaffeeeinheit liefern. Diese Konfiguration ermöglicht es daher, die Einheiten an verschiedenen Orten zu lagern, um den Arbeitsraum zu maximieren.

Der vorliegenden Erfindung liegt die Aufgabe zugrunde, eine verbesserte oder zumindest andere Ausführungsform einer Getränkezubereitungsvorrichtung bereitzustellen, die sich insbesondere durch geringere Einschränkungen hinsichtlich der Aufstellfläche für den Milchbehälter, auszeichnet.

Diese Aufgabe wird erfindungsgemäß durch den Gegenstand des unabhängigen Anspruchs gelöst. Vorteilhafte Weiterbildungen sind Gegenstand der abhängigen Ansprüche.

Die Erfindung beruht auf dem allgemeinen Gedanken, mehrere Anschlussmöglichkeiten für den Milchschlauch vorzusehen, so dass der Milchbehälter an zumindest zwei verschiedenen Seiten der Getränkezubereitungsvorrichtung aufgestellt werden kann. Erfindungsgemäß ist daher vorgesehen, dass die Milchzuführeinrichtung zwei Anschlusseinrichtungen mit einer Anschlussmöglichkeit für die Milch aufweist, die eine erste Gebrauchsstellung und mindestens eine zweite Gebrauchsstellung aufweist, wobei in der ersten Gebrauchsstellung die Anschlussmöglichkeit für die Milch an einer ersten Position gebildet ist, und wobei in der zweiten Gebrauchsstellung die Anschlussmöglichkeit für die Milch an einer zweiten Position gebildet ist, die sich von der ersten Position unterscheidet. Beispielsweise können die erste und die zweite Position an unterschiedlichen Seiten der Getränkezubereitungsvorrichtung angeordnet sein. Dadurch kann durch das Umschalten zwischen der ersten Gebrauchsstellung und der zweiten Gebrauchsstellung der Milchbehälter entweder an der einen Seite oder an der anderen Seite der Getränkezubereitungsvorrichtung aufgestellt werden. Somit sind die Aufstellmöglichkeiten der Getränkezubereitungsvorrichtung durch den Milchbehälter nicht eingeschränkt. Insbesondere kann die Getränkezubereitungsvorrichtung entweder links oder rechts an eine Wand gestellt werden, wobei dann jeweils der Milchbehälter an der der Wand gegenüberliegenden Seite der Getränkezubereitungsvorrichtung aufgestellt werden kann.

In der Beschreibung und den beigefügten Ansprüchen wird unter einer "Anschlussmöglichkeit" eine Vorrichtung oder ein Element verstanden, an die eine Leitung oder ein Kanal, beispielsweise ein Schlauch, angeschlossen werden kann und die fluidisch mit einem Milcheinlass der Milchaufschäumvorrichtung verbunden ist.

Es versteht sich, dass die Getränkezubereitungsvorrichtung auch mehr als zwei Anschlussmöglichkeiten für die Milch aufweisen kann. Dadurch kann eine noch größere Flexibilität erzielt werden.
Eine günstige Möglichkeit sieht vor, dass die Anschlusseinrichtung einen Servicetür für einen Milchschlauch zur Zuführung von Milch aufweist, wobei die Getränkezubereitungsvorrichtung derart ausgebildet ist, dass die Anschlussstutzen an mindestens zwei unterschiedlichen Positionen der Getränkezubereitungsvorrichtung lösbar angeordnet werden können, um zwischen den Gebrauchsstellungen zu wechseln. Dadurch, dass die Anschlussstutzen an den unterschiedlichen Positionen angeordnet sind, kann der Milchschlauch an diesen beiden Positionen angeschlossen werden. Somit kann der Milchbehälter an unterschiedlichen Positionen neben der Getränkezubereitungsvorrichtung angeordnet werden.

Eine weitere günstige Möglichkeit sieht vor, dass die Anschlusseinrichtung ein Verbindungselement aufweist, das mit der Milchaufschäumvorrichtung fluidisch verbunden ist, dass das Verbindungselement den Anschlussstutzen umfasst, an welchen der Milchschlauch zur Zuführung von Milch anschließbar ist, wobei die Anschlusseinrichtung mindestens zwei Verbindungselementhaltevorrichtungen zum lösbaren Halten des Verbindungselements aufweist, und dass die mindestens zwei Verbindungselementhaltevorrichtungen an unterschiedlichen Positionen der Getränkezubereitungsvorrichtung angeordnet sind. Somit kann das Verbindungselement zwischen mindestens zwei Positionen an der Getränkezubereitungsvorrichtung hin und her gewechselt werden, um somit zwischen den Gebrauchsstellungen zu wechseln. Somit können also zwei Zuführpunkte bzw. Anschlussmöglichkeiten für die Milch bereitgestellt werden.

Eine besonders günstige Möglichkeit sieht vor, dass die Anschlusseinrichtung einen Verbindungsschlauch aufweist, der die Milchaufschäumvorrichtung mit dem Verbindungselement fluidisch verbindet. Ein Schlauch ist üblicherweise flexibel, so dass der Verbindungsschlauch fest mit der Milchaufschäumvorrichtung und fest mit dem Verbindungselement verbunden sein kann, wobei dennoch das Verbindungselement an den beiden unterschiedlichen Positionen angeordnet werden kann. Somit ist für einen Benutzer der Getränkezubereitungsvorrichtung ein Umschalten zwischen der ersten Gebrauchsstellung und der zweiten Gebrauchsstellung in einfacher Weise durch Umsetzen des Verbindungselements möglich.

Erfindungsgemäß weist die Anschlusseinrichtung mindestens zwei erste Anschlussstutzen für einen Milchschlauch zur Zuführung von Milch auf, die an unterschiedlichen Positionen der Getränkezubereitungsvorrichtung angeordnet sind, wobei die Getränkezubereitungsvorrichtung derart ausgebildet ist, dass jeweils eine lösbare fluidische Verbindung zwischen der Milchaufschäumvorrichtung und den ersten Anschlussstutzen herstellbar ist, um zwischen den Gebrauchsstellungen zu wechseln. Durch die unterschiedlichen Positionen der mindestens zwei Anschlussstutzen kann eine flexible Anordnung des Milchbehälters gewährleistet sein. Dadurch, dass die fluidische Verbindung zwischen der Milchaufschäumvorrichtung an den ersten Anschlussstutzen lösbar hergestellt werden kann, kann ein Benutzer der Getränkezubereitungsvorrichtung einfach zwischen den Gebrauchsstellungen und damit zwischen den ersten Anschlussstutzen wechseln.

Eine weitere vorteilhafte Lösung sieht vor, dass die Anschlusseinrichtung einen Verbindungsschlauch aufweist, der mit der Milchaufschäumvorrichtung verbunden ist, dass die Anschlusseinrichtung mindestens zwei Verbindungselemente aufweist, die jeweils die erste Anschlussstutzen aufweisen, an welchen jeweils der Milchschlauch zur Zuführung von Milch anschließbar ist, und jeweils einen zweiten Anschlussstutzen aufweisen, an welchen der Verbindungsschlauch anschließbar ist, so dass die dem jeweiligen Verbindungselement zugeführte Milch über den Verbindungsschlauch zu der Milchaufschäumvorrichtung zuführbar ist. Somit kann der Benutzer der Getränkezubereitungsvorrichtung durch Umstecken des Verbindungsschlauches zwischen den beiden Verbindungselementen einfach zwischen der ersten und der zweiten Gebrauchsstellung umschalten.

Eine besonders vorteilhafte Lösung sieht vor, dass die Verbindungselemente fest an der Getränkezubereitungsvorrichtung gehalten sind. Dadurch muss der Benutzer lediglich den Verbindungsschlauch umstecken. Ein Umsetzen der Verbindungselemente ist nicht notwendig.

Eine günstige Variante sieht vor, dass die Getränkezubereitungsvorrichtung mindestens eine Getränkeausgabeöffnung aufweist, die höhenverstellbar ist, und/oder dass die Milchaufschäumvorrichtung höhenverstellbar ist. Dadurch kann die Getränkeausgabe an unterschiedlich hohe Getränkebehälter angepasst werden, so dass die Getränkezubereitungsvorrichtung besonders flexibel genutzt werden kann.

Eine weitere günstige Variante sieht vor, dass die Getränkezubereitungsvorrichtung eine Servicetür aufweist, die an einer Vorderseite der Getränkezubereitungsvorrichtung angeordnet ist, und dass die Anschlusseinrichtung in oder an der Servicetür angeordnet bzw. ausgebildet ist. Durch die Servicetür kann ein Zugang zu dem Inneren der Getränkezubereitungsvorrichtung ermöglicht werden, so dass beispielsweise durch die Servicetür der Satzbehälter oder Wasserbehälter oder ähnliches zugänglich ist. Dadurch, dass die Anschlusseinrichtung in oder an der Servicetür angeordnet ist, kann die Anschlusseinrichtung zum Umschalten zwischen der ersten Gebrauchsposition und der zweiten Gebrauchsposition durch Öffnen der Servicetür zugänglich gemacht werden. Somit kann das Umstellen zwischen der ersten Gebrauchsstellung und der zweiten Gebrauchsstellung vom Benutzer sehr einfach durchgeführt werden. Dadurch, dass die Servicetür an der Vorderseite der Getränkezubereitungsvorrichtung angeordnet ist, an welcher vorzugsweise auch die Getränkeausgabeöffnung angeordnet ist, ist bei einer üblichen Aufstellung der Getränkezubereitungsvorrichtung genügend Platz vor der Getränkezubereitungsvorrichtung, so dass die Tür ohne größere Umstände geöffnet werden kann und somit die Anschlusseinrichtung wunschgemäß eingestellt werden kann.

Eine besonders günstige Variante sieht vor, dass die erste Position für die Anschlussmöglichkeit an einer ersten Seite der Servicetür angeordnet ist, und dass die zweite Position für die Anschlussmöglichkeit an einer zweiten Seite der Servicetür angeordnet ist, die der ersten Seite gegenüberliegt. Somit kann die Anschlussmöglichkeit seitlich an der Getränkezubereitungsvorrichtung ausgebildet sein, so dass der Milchbehälter entweder "links" oder "rechts" von der Getränkezubereitungsvorrichtung angeordnet werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Ansicht einer erfindungsgemäßen Getränkezubereitungsvorrichtung in einer ersten Gebrauchsstellung,
- Fig. 2: eine perspektivische Ansicht einer erfindungsgemäßen Getränkezubereitungsvorrichtung in einer zweiten Gebrauchsstellung,
- Fig. 3: eine nicht erfindungsgemäße Prinzipskizze auf eine dem Inneren der Getränkezubereitungsvorrichtung zugewandten Rückseite der Servicetür der Getränkezubereitungsvorrichtung, in einer ersten Gebrauchsstellung,
- Fig. 4: eine der Fig. 3 entsprechende nicht erfindungsgemäße Prinzipskizze, wobei die Anschlusseinrichtung in der zweiten Gebrauchsstellung ist,
- Fig. 5: eine der Fig. 3 entsprechende Darstellung einer Servicetür einer Getränkezubereitungsvorrichtung gemäß einer zweiten Ausführungsform der Erfindung, und
- Fig. 6: eine der Fig. 5 entsprechende Prinzipskizze, wobei die Anschlusseinrichtung in einer zweiten Gebrauchsstellung dargestellt ist.

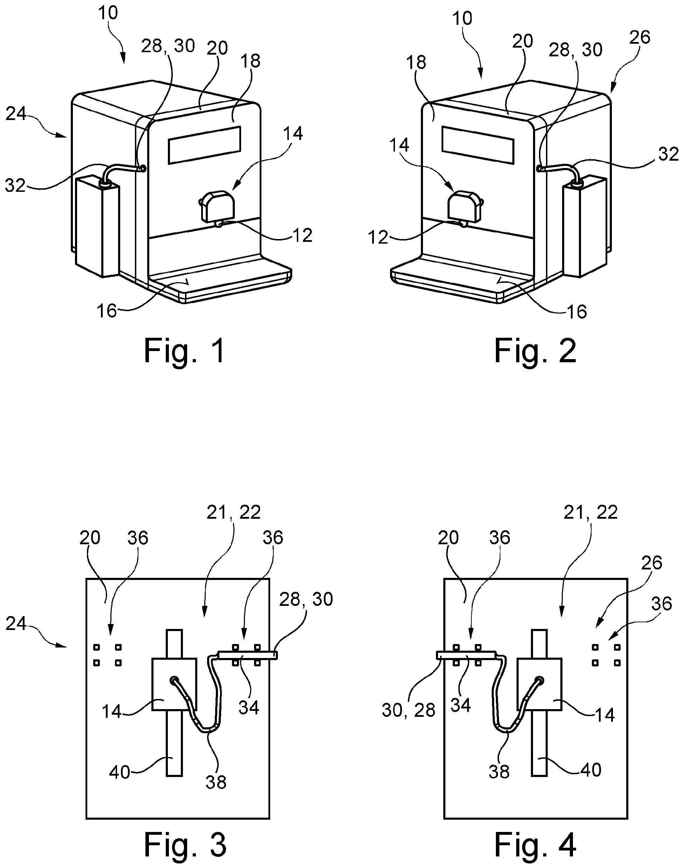

Eine in den Figuren 1 bis 4 dargestellte einer Getränkezubereitungseinrichtung 10 weist eine Getränkeausgabeöffnung 12, eine Milchaufschäumvorrichtung 14 und eine Abstellfläche 16 für einen Getränkebehälter auf. Die Getränkeausgabeöffnung 12 und die Abstellfläche 16 sind vorzugsweise an einer Vorderseite 18 der Getränkezubereitungsvorrichtung 10 angeordnet. Die Getränkezubereitungsvorrichtung 10 ist beispielsweise ein Kaffeevollautomat.

Ferner weist die Getränkezubereitungsvorrichtung 10 eine Servicetür 20 auf, welche sich beispielsweise über die gesamte Vorderseite 18 erstreckt, so dass die gesamte Vorderseite samt Getränkeausgabeöffnung 12, Milchaufschäumvorrichtung 14 und Abstellfläche 16 weggeklappt werden kann. Durch die Servicetür 20 kann beispielsweise ein Wassertank oder ein Satzbehälter oder eine Abtropfschale oder ähnliches entnommen, geleert oder aufgeführt werden.

Des Weiteren weist die Getränkezubereitungsvorrichtung 10 eine Milchzuführeinrichtung 21 mit einer Anschlusseinrichtung 22 für Milch auf. Die Milchzuführeinrichtung 21 ist dazu ausgebildet, Milch zu empfangen und der Milchaufschäumvorrichtung 14 zuzuleiten. Die Anschlusseinrichtung 22 weist eine erste Gebrauchsstellung 24 auf, wie sie beispielsweise in den Figuren 1 und 3 dargestellt ist, und eine zweite Gebrauchsstellung 26, wie sie beispielsweise in den Figuren 2 und 4 dargestellt ist. In den beiden Gebrauchsstellungen 24 und 26 besteht jeweils eine Anschlussmöglichkeit 28 für die Milch. Die Position der Anschlussmöglichkeit 28 in der ersten Gebrauchsstellung 24 unterscheidet sich von der Position der Anschlussmöglichkeit 28 in der zweiten Gebrauchsstellung 26. Die beiden Positionen für die Anschlussmöglichkeiten 28 sind vorzugsweise seitlich an gegenüberliegenden Seiten der Getränkezubereitungsvorrichtung 10 angeordnet, so dass ein Milchbehälter für die Zuführung von Milch entweder an der linken oder der rechten Seite der Getränkezubereitungsvorrichtung 10 aufgestellt werden kann.

Die Anschlusseinrichtung 22 weist einen Anschlussstutzen 30 für einen Milchschlauch 32 auf, über welchen die Milch aus dem Milchbehälter der Anschlusseinrichtung 22 zugeführt werden kann. Der Anschlussstutzen 30 kann dabei an zwei verschiedenen Positionen angeordnet sein, um die Anschlussmöglichkeit 28 an den beiden Positionen zu bilden, die der ersten Gebrauchsstellung 24 und der zweiten Gebrauchsstellung 26 entsprechen.

Der Anschlussstutzen 30 ist an einem Verbindungselement 34 ausgebildet, welches lösbar an der Getränkezubereitungsvorrichtung 10, vorzugsweise in oder an der Servicetür 20 gehalten ist. Um das Verbindungselement 34 lösbar zu halten, weist die Anschlusseinrichtung 22 mindestens zwei Verbindungselementhaltevorrichtungen 36 auf, welche jeweils das Verbindungselement 34 lösbar halten können. Dadurch kann das Verbindungselement 34 an zwei unterschiedlichen Positionen an der Getränkezubereitungsvorrichtung 10 angeordnet werden. Somit können die Anschlussstutzen 30 auch zwischen zwei Positionen versetzt werden. Daher ist durch Versetzen des Verbindungselements 34 ein Umschalten zwischen der ersten Gebrauchsstellung 24 und der zweiten Gebrauchsstellung 26 möglich.

Schließlich weist die Anschlusseinrichtung 22 einen Verbindungsschlauch 38 auf, welcher das Verbindungselement 34 fluidisch mit der Milchaufschäumvorrichtung 14 verbindet, so dass die Milch, die über den Anschlussstutzen 30 und das Verbindungselement 34 in die Getränkezubereitungsvorrichtung 10 gelangt ist, über den Verbindungsschlauch 38 zur Milchaufschäumvorrichtung 14 geleitet werden kann.

Durch die flexible fluidische Verbindung über den Verbindungsschlauch 38 kann die Milchaufschäumvorrichtung 14 und die Getränkeausgabeöffnung 12 höhenverstellbar ausgebildet sein. Dazu ist insbesondere eine Höhenverstelleinrichtung 40 vorgesehen.

Vorzugsweise ist die Anschlusseinrichtung 22 in der Servicetür 20 ausgebildet, vorzugsweise an einer Rückseite der Servicetür 20, die im geschlossenen Zustand zu einem Innenraum der Getränkezubereitungsvorrichtung 10 gerichtet ist. Wenn die Servicetür 20
geöffnet ist, kann ein Benutzer der Getränkezubereitungsvorrichtung 10 die Anschlusseinrichtung 22 zwischen der ersten Gebrauchsstellung 24 und der zweiten Gebrauchsstellung 26 durch Versetzen des Verbindungselements 34 umschalten.

Alternativ oder ergänzend hierzu kann die Anschlusseinrichtung zumindest teilweise an einem Hauptkörper der Getränkezubereitungsvorrichtung 10 aber angrenzend zu der Servicetür 20 ausgebildet sein. Dadurch kann auch bei geöffneter Servicetür 20 beispielsweise die Verbindungselemente 34 versetzt werden, auch wenn diese nicht direkt an der Servicetür 20 gehalten sind.

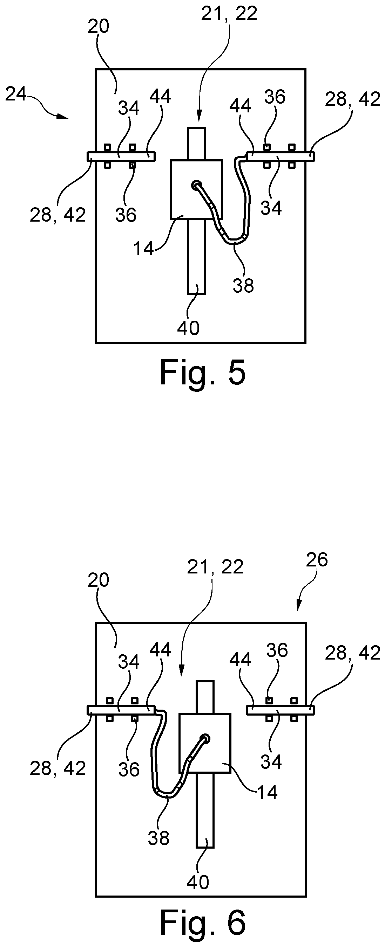

Eine in den Figuren 5 und 6 dargestellte erfindungsgemäße Ausführungsform der Getränkezubereitungsvorrichtung 10 unterscheidet sich von der in den Figuren 1 bis 4 dargestellten Getränkezubereitungsvorrichtung 10 dadurch, dass die Anschlusseinrichtung 22 zwei Verbindungselemente 34 aufweist, die fest an zwei unterschiedlichen Positionen an der Getränkezubereitungsvorrichtung 10, vorzugsweise an der Servicetür 20, gehalten sind.

Die Verbindungselemente 34 weisen jeweils einen ersten Anschlussstutzen 42 für die Milch auf, der nach außen gerichtet ist, so dass ein Milchschlauch 32 anschließbar ist. Ferner weisen die Verbindungselemente 34 jeweils einen zweiten Anschlussstutzen 44 auf, an welchen der Verbindungsschlauch 38 lösbar befestigt werden kann. Somit kann durch Abziehen des Verbindungsschlauchs 38 von einem Verbindungselement 34 und anschließendem Anbringen an das andere Verbindungselement 34 zwischen der ersten Gebrauchsstellung 24 und der zweiten Gebrauchsstellung 26 umgeschaltet werden.

Im Übrigen stimmt die in den Figuren 4 und 5 dargestellte erfindungsgemäße Ausführungsform der Getränkezubereitungseinrichtung 10 mit der in den Figuren 1 bis 4 dargestellten Ausführungsform der Getränkezubereitungsvorrichtung 10 hinsichtlich Aufbau und Funktion überein, auf deren vorstehende Beschreibung insoweit Bezug genommen wird.

### Bezugszeichenliste

- 10: Getränkezubereitungsvorrichtung
- 12: Getränkeausgabeöffnung
- 14: Milchaufschäumvorrichtung
- 16: Abstellfläche
- 18: Vorderseite
- 20: Servicetür
- 21: Milchzuführeinrichtung
- 22: Anschlusseinrichtung
- 24: erste Gebrauchsstellung
- 26: zweite Gebrauchsstellung
- 28: Anschlussmöglichkeit
- 30: Anschlussstutzen
- 32: Milchschlauch
- 34: Verbindungselement
- 36: Verbindungselementhaltevorrichtung
- 38: Verbindungsschlauch
- 40: Höhenverstelleinrichtung
- 42: erster Anschlussstutzen
- 44: zweiter Anschlussstutzen

## Patentansprüche

1. Getränkezubereitungsvorrichtung (10), insbesondere ein Kaffeevollautomat, mit einer Milchaufschäumvorrichtung (14) und mit einer Milchzuführeinrichtung (21) zum Zuführen von Milch zur Milchaufschäumvorrichtung (14), wobei die Milchzuführeinrichtung (21) eine Anschlusseinrichtung (22) mit einer Anschlussmöglichkeit (28) für die Milch aufweist, die eine erste Gebrauchsstellung (24) und mindestens eine zweite Gebrauchsstellung (26) aufweist, so dass durch das Umschalten zwischen der ersten Gebrauchsstellung und der zweiten Gebrauchsstellung der Milchbehälter entweder an der einen Seite oder an der anderen Seite der Getränkezubereitungsvorrichtung aufgestellt werden kann, wobei in der ersten Gebrauchsstellung (24) die Anschlussmöglichkeit (28) für die Milch an einer ersten Position gebildet ist, und wobei in der zweiten Gebrauchsstellung (26) die Anschlussmöglichkeit (28) für die Milch an einer zweiten Position gebildet ist, die sich von der ersten Position unterscheidet, so dass ein Anschlussstutzen (30) an mindestens zwei unterschiedlichen Positionen der Getränkezubereitungsvorrichtung lösbar angeordnet werden kann, um zwischen den Gebrauchsstellungen zu wechseln, **dadurch gekennzeichnet, dass** die Anschlusseinrichtung (22) mindestens zwei erste Anschlussstutzen (42) für einen Milchschlauch (32) zur Zuführung von Milch aufweist, die an unterschiedlichen Positionen der Getränkezubereitungsvorrichtung (10) angeordnet sind, wobei die Getränkezubereitungsvorrichtung (10) derart ausgebildet ist, dass jeweils eine lösbare fluidische Verbindung zwischen der Milchaufschäumvorrichtung (14) und den ersten Anschlussstutzen (42) herstellbar ist, um zwischen den Gebrauchsstellungen (24, 26) zu wechseln.

2. Getränkezubereitungsvorrichtung nach Anspruch 1, **dadurch gekennzeichnet, dass** die Anschlusseinrichtung (22) einen Anschlussstutzen (30) für einen Milchschlauch (32) zur Zuführung von Milch aufweist, wobei die Getränkezubereitungsvorrichtung (10) derart ausgebildet ist, dass der Anschlussstutzen (30) an mindestens zwei unterschiedlichen Positionen der Getränkezubereitungsvorrichtung (10) lösbar angebracht werden kann, um zwischen den Gebrauchsstellungen (24, 26) zu wechseln.

3. Getränkezubereitungsvorrichtung nach Anspruch 2, **dadurch gekennzeichnet, dass** die Anschlusseinrichtung (22) ein Verbindungselement (34) aufweist, das mit der Milchaufschäumvorrichtung (14) fluidisch verbunden ist, dass das Verbindungselement (34) den Anschlussstutzen (30) umfasst, an welchen der Milchschlauch (32) zur Zuführung von Milch anschließbar ist, dass die Anschlusseinrichtung (22) mindestens zwei Verbindungselementhaltevorrichtungen (36) zum lösbaren halten des Verbindungselements (34) aufweist, und dass die mindestens zwei Verbindungselementhaltevorrichtungen (36) an unterschiedlichen Positionen der Getränkezubereitungsvorrichtung (10) angeordnet sind.

4. Getränkezubereitungsvorrichtung nach Anspruch 3, **dadurch gekennzeichnet, dass** die Anschlusseinrichtung einen Verbindungsschlauch (38) aufweist, der die Milchaufschäumvorrichtung (14) mit dem Verbindungselement (34) fluidisch verbindet.

5. Getränkezubereitungsvorrichtung nach Anspruch 1, **dadurch gekennzeichnet, dass** die Anschlusseinrichtung (22) einen Verbindungsschlauch (38) aufweist, der mit der Milchaufschäumvorrichtung (14) verbunden ist, dass die Anschlusseinrichtung (22) mindestens zwei Verbindungselemente (34) aufweist, die jeweils die ersten Anschlussstutzen (42) aufweisen, an welchen jeweils der Milchschlauch (32) zur Zuführung von Milch anschließbar ist, und jeweils einen zweiten Anschlussstutzen (44) aufweisen, an welchen der Verbindungsschlauch (38) anschließbar ist, sodass die dem jeweiligen Verbindungselement (34) zugeführte Milch über den Verbindungsschlauch (38) zu der Milchaufschäumvorrichtung (14) zuführbar ist.

6. Getränkezubereitungsvorrichtung nach Anspruch 5, **dadurch gekennzeichnet, dass** die Verbindungselemente (34) fest an der Getränkezubereitungsvorrichtung (10) gehalten sind.

7. Getränkezubereitungsvorrichtung nach einem der Ansprüche 1 bis 6 **dadurch gekennzeichnet, dass** die Getränkezubereitungsvorrichtung (10) mindestens eine Getränkeausgabeöffnung (12) aufweist, die höhenverstellbar ist, und/oder dass die Milchaufschäumvorrichtung (14) höhenverstellbar ist.

8. Getränkezubereitungsvorrichtung nach einem der Ansprüche 1 bis 7, **dadurch gekennzeichnet, dass** die Getränkezubereitungsvorrichtung (10) eine Servicetür (20) aufweist, die an einer Vorderseite (18) der Getränkezubereitungsvorrichtung (10) angeordnet ist, und dass die Anschlusseinrichtung (22) in der Servicetür (20) angeordnet oder an der Servicetür (20) ausgebildet ist.

## Claims

1. Beverage preparation device (10), in particular a fully automatic coffee machine, having a milk-foaming device (14) and having a milk-supplying apparatus (21) for supplying milk to the milk-foaming device (14), wherein the milk-supplying apparatus (21) has a connecting apparatus (22) with a connection option (28) for the milk, having a first position of use (24) and at least one second position of use (26), such that by switching between the first position of use and the second position of use, the milk container can be positioned either on one side or on the other side of the beverage preparation device, wherein in the first position of use (24) the connection option (28) for the milk is formed at a first position, and wherein in the second position of use (26) the connection option (28) for the milk is formed at a second position that differs from the first position, such that a connecting piece (30) can be arranged detachably at at least two different positions of the beverage preparation device in order to switch between the positions of use, **characterised in that** the connecting apparatus (22) has at least two first connecting pieces (42) for a milk hose (32) for supplying milk, which are arranged at different positions of the beverage preparation device (10), wherein the beverage preparation device (10) is designed such that in each case a detachable fluid connection can be established between the milk-foaming device (14) and the first connection piece (42) in order to switch between the positions of use (24, 26).

2. Beverage preparation device according to claim 1, **characterised in that** the connecting apparatus (22) has a connecting piece (30) for a milk hose (32) for supplying milk, wherein the beverage preparation device (10) is designed such that the connecting piece (30) can be attached detachably at at least two different positions of the beverage preparation device (10) in order to switch between the positions of use (24, 26).

3. Beverage preparation device according to claim 2, **characterised in that** the connecting apparatus (22) has a connecting element (34) that is fluidically connected to the milk-foaming device (14), **in that** the connecting element (34) encompasses the connecting piece (30) to which the milk hose (32) can be connected for supplying milk, **in that** the connecting apparatus (22) has at least two connecting element-retaining devices (36) for detachably retaining the connecting element (34), and **in that** the at least two connecting element-retaining devices (36) are arranged at different positions of the beverage preparation device (10).

4. Beverage preparation device according to claim 3, **characterised in that** the connecting apparatus has a connecting hose (38) that fluidically connects the milk-foaming device (14) to the connecting element (34).

5. Beverage preparation device according to claim 1, **characterised in that** the connecting apparatus (22) has a connecting hose (38) that is connected to the milk-foaming device (14), **in that** the connecting apparatus (22) has at least two connecting elements (34) that each have the first connecting pieces (42) to which in each case the milk hose (32) for supplying milk can be connected, and that each have a second connecting piece (44) to which the connecting hose (38) can be connected, such that the milk supplied to the respective connecting element (34) can be supplied to the milk-foaming device (14) by means of the connecting hose (38).

6. Beverage preparation device according to claim 5, **characterised in that** the connecting elements (34) are retained tightly on the beverage preparation device (10).

7. Beverage preparation device according to one of claims 1 to 6, **characterised in that** the beverage preparation device (10) has at least one beverage dispensing opening (12) that is height-adjustable, and/or **in that** the milk-foaming device (14) is height-adjustable.

8. Beverage preparation device according to one of claims 1 to 7, **characterised in that** the beverage preparation device (10) has a service door (20) arranged on a front (18) of the beverage preparation device (10), and **in that** the connecting apparatus (22) is arranged in the service door (20) or embodied on the service door (20).

## Revendications

1. Dispositif de préparation de boissons (10), en particulier machine à café intégralement automatique, avec un dispositif de moussage de lait (14) et avec un dispositif d'alimentation en lait (21) pour alimenter le dispositif de moussage de lait (14) en lait, dans lequel le dispositif d'alimentation en lait (21) présente un appareillage de raccordement (22) avec une possibilité de raccordement (28) pour le lait, qui présente une première position d'utilisation (24) et au moins une deuxième position d'utilisation (26), de sorte que la commutation entre la première position d'utilisation et la deuxième position d'utilisation permet de placer le réservoir à lait d'un côté ou de l'autre du dispositif de préparation de boissons, dans lequel dans la première position d'utilisation (24) la possibilité de raccordement (28) pour le lait est constituée en une première position, et dans lequel dans la deuxième position d'utilisation (26) la possibilité de raccordement (28) pour le lait est constituée en une deuxième position différente de la première position, de sorte qu'une tubulure de raccordement (30) peut être disposée de façon amovible en au moins deux positions différentes du dispositif de préparation de boissons, pour alterner entre les positions d'utilisation, **caractérisé en ce que** l'appareillage de raccordement (22) présente au moins deux premières tubulures de raccordement (42) pour un flexible à lait (32) pour l'alimentation en lait, disposées en des positions différentes du dispositif de préparation de boissons (10), dans lequel le dispositif de préparation de boissons (10) est exécuté de telle sorte qu'une liaison fluidique amovible peut s'établir entre le dispositif de moussage de lait (14) et les premières tubulures de raccordement (42), afin d'alterner entre les positions d'utilisation (24, 26).

2. Dispositif de préparation de boissons selon la revendication 1, **caractérisé en ce que** l'appareillage de raccordement (22) présente une tubulure de raccordement (30) pour un flexible à lait (32) pour l'alimentation en lait, dans lequel le dispositif de préparation de boissons (10) est exécuté de telle sorte que la tubulure de raccordement (30) peut être placée de façon amovible en au moins deux positions différentes du dispositif de préparation de boissons (10), pour alterner entre les positions d'utilisation (24, 26).

3. Dispositif de préparation de boissons selon la revendication 2, **caractérisé en ce que** l'appareillage de raccordement (22) présente un élément de liaison (34) en liaison fluidique avec le dispositif de moussage de lait (14), **en ce que** l'élément de liaison (34) comprend la tubulure de raccordement (30), à laquelle le flexible à lait (32) peut être raccordé pour l'alimentation en lait, **en ce que** l'appareillage de raccordement (22) présente au moins deux dispositifs de retenue d'élément de liaison (36) pour la retenue amovible de l'élément de liaison (34), et **en ce que** les au moins deux dispositifs de retenue d'élément de liaison (36) sont disposés en des positions différentes du dispositif de préparation de boissons (10).

4. Dispositif de préparation de boissons selon la revendication 3, **caractérisé en ce que** l'appareillage de raccordement présente un flexible de liaison (38), qui relie fluidiquement le dispositif de moussage de lait (14) à l'élément de liaison (34).

5. Dispositif de préparation de boissons selon la revendication 1, **caractérisé en ce que** l'appareillage de raccordement (22) présente un flexible de liaison (38) relié au dispositif de moussage de lait (14), **en ce que** l'appareillage de raccordement (22) présente au moins deux éléments de liaison (34), qui présentent respectivement les premières tubulures de raccordement (42), auxquelles le flexible à lait (32) pour l'alimentation en lait peut respectivement être raccordé, et respectivement une deuxième tubulure de raccordement (44), à laquelle le flexible de liaison (38) peut être raccordé, de sorte que le lait mené à l'élément de liaison respectif (34) peut être mené au dispositif de moussage de lait (14) via le flexible de liaison (38).

6. Dispositif de préparation de boissons selon la revendication 5, **caractérisé en ce que** les éléments de liaison (34) sont maintenus de manière fixe sur le dispositif de préparation de boissons (10).

7. Dispositif de préparation de boissons selon l'une des revendications 1 à 6, **caractérisé en ce que** le dispositif de préparation de boissons (10) présente au moins un orifice de distribution de boissons (12) réglable en hauteur et/ou **en ce que** le dispositif de moussage de lait (14) est réglable en hauteur.

8. Dispositif de préparation de boissons selon l'une des revendications 1 à 7, **caractérisé en ce que** le dispositif de préparation de boissons (10) présente une porte d'entretien (20) disposée sur un côté avant (18) du dispositif de préparation de boissons (10), et **en ce que** l'appareillage de raccordement (22) est disposé dans la porte d'entretien (20) ou exécuté sur la porte d'entretien (20).
